# EUROPEAN PATENT APPLICATION

(11) **EP 3 444 736 A1**
(43) Date of publication of application: **20.02.2019**
(21) Application number: 17186938.1
(22) Date of filing: 18.08.2017
(51) Int. Cl.: G06F 21/32, G06F 21/87

(54) **DEVICE AND METHOD FOR STORING AND ACCESSING SECRET USER-AUTHENTICATION DATA**

(71) Applicant: Vestel Elektronik Sanayi ve Ticaret A.S., 45030 Manisa (TR)
(72) Inventor: ÖZEL, Ahmet, 45030 Manisa (TR)
(74) Representative: Flint, Adam

(57) **Abstract**

A device (1) for storing and accessing secret user-authentication data, such as a password, comprises a data storage system (22, 23) to store the secret user-authentication data. A control system (20, 24) allows selective access to the secret user-authentication data. A data interface (10a) is provided and internal circuitry (30a) of the device (1) enables the secret user-authentication data to be supplied from the data interface (10a) to the data storage system (22, 23) for storage. The internal circuitry (30a) is disabled to render the data interface inoperable in response to a disable instruction, thereby preventing any unauthorized user from gaining access to the secret user-authentication data via the data interface (10a).

## Description

### Technical Field

The present disclosure relates to a device and method for storing and accessing secret user-authentication data.

### Background

Nowadays, users may be required to remember many different passwords. Passwords are often required to access online accounts, telephone banking and other telephone services, physical spaces (buildings, rooms, safes etc.) and other contexts where user authentication is required. It can be challenging for users, and elderly users in particular, to remember so many different passwords etc., particularly when they use different passwords for different purposes, as is often recommended for security reasons.

### Summary

According to a first aspect disclosed herein, there is provided a device for storing and accessing secret user-authentication data, the device comprising: a data storage system configured to store secret user-authentication data; a control system configured to receive from a user a request to access the stored secret user-authentication data, determine if the user is authorized to access the secret user-authentication data, and output the secret user-authentication data to the user if so; a data interface for input of secret user-authentication data; and internal circuitry for enabling the secret user-authentication data to be supplied via the data interface to the data storage system for storage therein, wherein the control system is configured to disable the internal circuitry to render the data interface inoperable in response to a disable instruction, thereby preventing any unauthorized user from gaining access to the secret user-authentication data via the data interface.

This provides a convenient way for a user to store their secret user-authentication data and access it when needed, in a secure manner.

In embodiments, the device may comprise: a housing; and at least one anti-tampering sensor coupled to the control system for detecting when the housing has been tampered with, wherein the data storage system, the control system, the internal circuitry and the anti-tampering sensor are enclosed within the housing, such that the enclosed components cannot be accessed without tampering with the housing, wherein the control system is configured to erase the secret user-authentication data in response to detecting that the housing has been tampered with.

The two security features, namely the disabling of the internal circuity and the anti-tampering mechanism, act in combination to provide a highly secure storage environment for those data. The enclosed components of the housing cannot be accessed without tampering with the housing, which if detected causes the data to be erased. In particular, the internal circuity that has been disabled to render the data interface inoperable cannot be accessed by an unauthorized user attempting to re-activate it without tampering with the housing in a detectable manner.

The device may comprise at least one biometric sensor coupled to the control system, wherein the control system is configured to determine whether the user is authorized to access the secret user-authentication data based on a biometric identifier detected via the at least one biometric sensor.

The at least one biometric sensor may comprise a fingerprint sensor.

The control system may be configured to provide access to the secret user-authentication data for as long as an authorized biometric identifier remains detectable via the at least one biometric sensor.

The control system may be configured to disable the internal circuitry in response to the disable instruction such that the internal circuitry cannot be re-enabled by any user without access to the internal circuitry.

The control system may be configured to disable the internal circuitry in response to the disable instruction by destroying at least part of the internal circuitry. For example, the control system may be configured to disable the internal circuitry by blowing at least one fuse of the internal circuitry.

The data interface may comprise at least one external connector.

The internal circuitry may comprise connecting circuitry arranged to connect the data interface to the data storage system, wherein the control system may be configured to disable the connecting circuitry to disconnect the data interface from the data storage system in response to the disable instruction.

The device may comprise a battery for powering the device, which is enclosed within the housing, whereby the battery cannot be accessed without tampering with the housing.

The housing may be gastight.

The gastight housing may contain pressurized gas, depressurized gas or a vacuum, and the at-least one anti-tampering sensor comprises a pressure sensor for detecting a pressure change caused by the housing no longer being gastight.

The gastight housing may be devoid of at least one atmospheric gas, and the at least one anti-tampering sensor comprises a sensor for detecting the presence of said atmospheric gas caused by the housing non longer being gastight.

The device may comprise at least one output device coupled to the control system, wherein the control system is configured to use the output device to output the secret user-authentication data to the user.

The at least one output device may comprise a display.

The device may be embodied as a portable, pocket-sized device, or a hardware module for incorporation in a mobile device.

Another aspect provides a method of storing and accessing secret user-authentication data, the method comprising the following steps: receiving secret user-authentication data at a data interface of a device; supplying the secret user-authentication data to a data storage system of the device, the device having internal circuitry which enables the supplying step to be performed; storing the secret user-authentication data in the data storage system; disabling the internal circuitry to render the data interface inoperable in response to a disable instruction, thereby preventing any unauthorized user from gaining access to the secret user-authentication data via the data interface; receiving from a user a request to access the stored secret user-authentication data; and determining if the user is authorized to access the secret user-authentication data and outputting the secret user-authentication data to the user if so.

### Brief Description of the Drawings

To assist understanding of the present disclosure and to show how embodiments may be put into effect, reference is made by way of example to the accompanying drawings in which:
Figure 1 shows schematically a perspective view of an example device for storing and accessing a password;
Figure 2 shows schematically a block diagram of an example device for storing and accessing a password;
Figure 3 shows schematically a cross-section view of an example device for storing and accessing a password; and
Figure 4 shows a flow chart for an example method of storing and accessing a password.

### Detailed Description

Passwords used in every field of daily life may be forgotten over time and it is difficult to access anything related to passwords in accounts where the passwords are connected. This is a particular problem for elderly people.

An example device - referred to below as a "password reminder device" - is described, which reminds a user of a forgotten password subject to successful fingerprint authentication. The device has various hardware security features to protect the password.

In particular, after uploading the password to device, a fuse on at least one data line of the device is blown, possibly subject to user confirmation. This ensures the data line(s) cannot be used to gain access to the password stored in the device.

Moreover, the device has a housing, which, in the production stage, is filled with pressurized air or the air in the housing is evacuated. The internal components of the device cannot be accessed without comprising the housing, causing an outflux or influx of air, which in turn is detectable using an oxygen sensor, pressure sensor, or other anti-tampering sensor enclosed in the housing. The password is deleted if any such tampering is detected.

Note the term "password" as used herein refers to any form of secret user-authentication data, including PINs (personal identification numbers), passcodes, access codes, "secret answers" to security questions and the like, password hints or prompts, as well as secret character strings. That is, "password" includes secret data which is assumed to be known only to a particular user, and which can thus be used to authenticate that user for various purposes, such as accessing online accounts, telephone banking and other telephone services, to gain access to a physical space (such as a building, room, safe etc.) or for any other purpose.

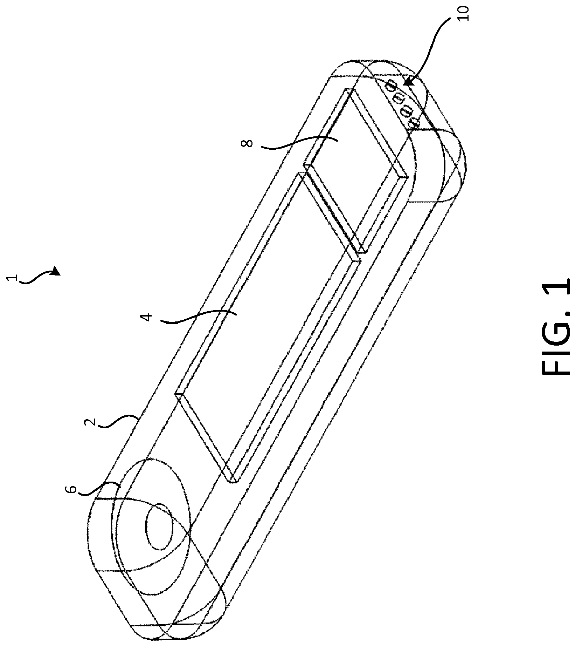

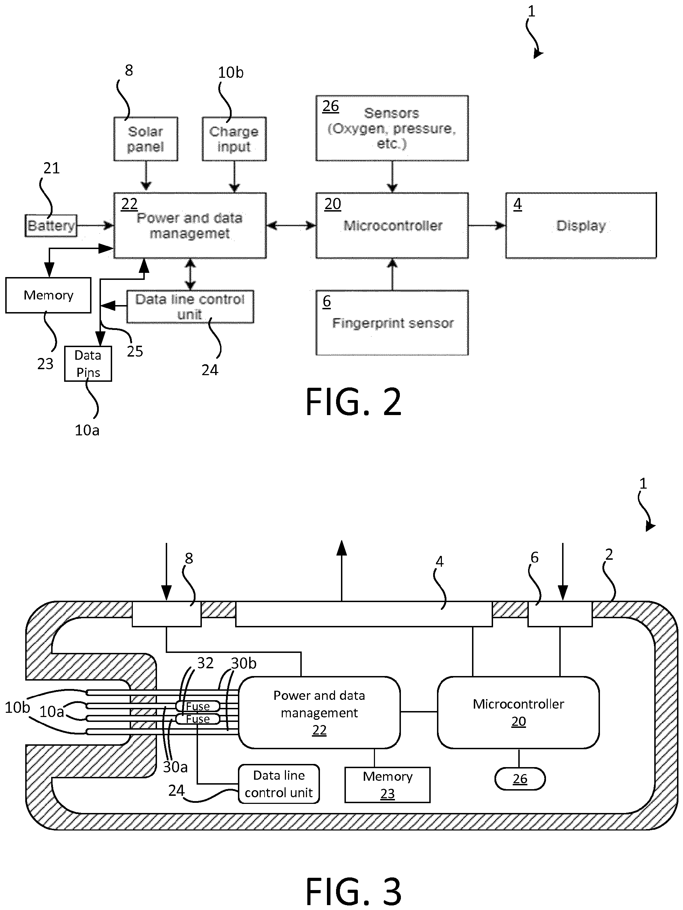

Figures 1 shows a perspective view of the password reminder device 1, whereas Figure 2 shows a block diagram of the password reminder device 1 and Figure 3 a cross-section view of the password reminder device 1.

With reference to Figure 1, the device is shown to comprise a housing 2 and, supported by the housing 2: a display 4 (screen), biometric sensor in the form of a fingerprint sensor 6, a solar panel 8, and a set of external connectors 10 (pins). The external pins 10 comprise data pins (10a, Figures 2 and 3), for transferring password data to the device, and voltage pins (10b, Figures 2 and 3) for charging the password reminder device 1. The pins 10 are external in the sense that they are accessible outside of the housing 2, and can thus be used to connect the password reminder device 1 to external data and power sources. The pins 10 could for example be embodied in an external bus interface, such as a USB (universal serial bus) interface, male or female. The data pins 10b form a data interface for supplying password data to the password reminder device 1 for storage, which is a physical (wired) interface in this example. The housing 2, screen 4, fingerprint sensor 6, solar panel 8 and pins 10 are also shown in Figures 2 and 3.

The password reminder device 1 is a small (pocket-sized), portable device and can take the form of a "keyring" device, having a keyring attachment for attaching the device to a keyring.

The password reminder device 1 stores a password. The password reminder device 1 is activated by fingerprint and displays the password if the fingerprint is authorized. When a user wishes to gain access to the password, the user places a finger on the fingerprint sensor 6. If the fingerprint is recognized as authorized, the password is displayed on the screen 4.

The password is displayed on the screen 4 for as long as the finger is readable to the fingerprint reader, that is, for as long as the authorized fingerprint remains detectable to the fingerprint sensor 6.

The password reminder device 1 comprises additional components, which are not shown in Figure 1 but which are shown in either Figure 2 or Figure 3 or both.

Figure 2 shows a schematic block diagram of the password reminder device 1. As shown in Figure 2, the password reminder device 1 also comprises a microcontroller 20, a power and data management system 22, and a data line control unit 24. The microcontroller 20 and data line control unit 24 constitute a control system of the password reminder device 1. The microcontroller 20 and data line control unit 24 are shown coupled to the power and data management system 22. The microcontroller 20 and data line control unit 24 are shown as separate elements, and whilst these may be separate physical components of the password reminder device 1, the functionality of the data line control unit 24 could in fact be implemented by the microcontroller 20 itself. Moreover the described functions of the microcontroller 20/control system could also be provided by another form of processor or processing system or circuitry, some examples of which are given later.

The password reminder device 1 is also shown to comprise at least one anti-tampering sensor 26, such as a pressure sensor or oxygen sensor (or sensor for detecting the presence of another atmospheric gas, depending on the embodiment). The anti-tampering sensor 26, the display 4 and the fingerprint sensor 6 are shown coupled to the microcontroller 20.

The solar panel 8, data pins 10a and voltage pints 10b are shown connected to the power and management system 22. In particular, a connection 25 between the data pins 10a and the power and data management system 22 is shown, which is an electrical connection controlled by the data line control unit 24 as described later.

The password reminder device 1 is also shown to comprise a battery 21 and a memory 23 connected to the power and data management system 22. The battery 21 can be charged using electrical power generated by the solar panel 8, or electrical power supplied via the voltage pins 10b.

In order to store a password in the memory 23, an external device, such as an external computer, is (physically) connected to the data pins 10a, for example via a cable or by plugging the password reminder device 1 directly into the external device. Password data can then be provided from the external device to the power and data management system 22 via the data pins 10a and the connection 25, for storage in the memory 23. The memory 23 and power and data management system 22 constitute a data storage system, which is connected to the data pins 10a for receiving, via the electrical connection 25, password data to be stored.

Figure 3 shows a cross-section view of the password reminder device 1, which shows at least some of the components that are enclosed within the housing 2, namely the microcontroller 20, the power and management system 22, the memory 23, the data line control unit 24, and the anti-tampering sensor 26, as well as internal circuitry that will now be described.

The data pins 10a are shown connected to the power and data management system 22 via respective data lines 30a of the internal circuitry, which provide the electrical connection 25 between the data pins 10a and the power and data management system 22. The data lines 30a comprise respective fuses 32, which can be blown by the data line control unit 24 in order to sever the electrical connection 25, referred to herein as "burning" the data lines 30a. That is, each data pin 10a is connected to the power and data management system 22 via a respective fuse 32, which can be blown in order to permanently disconnect that data pin 10a from the power and data management system 22, rendering it inoperable. The data lines 30 comprising the fuses 32 constitute connecting circuitry of the password reminder device 1, which can be disabled by blowing the fuses 32. Blowing the fuses 32 prevents any user from gaining access to the memory 23, and thus any password data stored therein, via the data pins 30a. Note, a fuse may not be needed on every data line; it may be sufficient to disconnect only one or some of the data lines 10a to achieve this effect.

A data line comprising a fuse can mean that the data line consists of a fuse (i.e. the fuse is the data line), or that the data line is formed of a fuse in addition with other components, such as wires, connections on a circuit board, and/or other electrical components etc.

The voltage pins 10b are shown connected to the power and data management system 22 via voltage lines 30b, which remain active even when the fuses 32 have been blown in one example. This ensures the battery 21 can still be charged via the voltage pins 10b when the fuses 32 have been blown.

For ease of use, in this example, the password reminder device 1 may be configured to store only a single password. A user with multiple passwords therefore needs to use a separate password reminder device for each of those passwords. However, alternative password reminder devices that can store multiple passwords are not excluded from the scope of this disclosure.

The password reminder device 1 has hardware security features, such that it cannot be used by others and cannot be accessed without erasing the stored password data. In particular, on first use, the password is loaded using an external computer, via the data pins 10a. After the approval by the user, the fuses 32 on the data lines 30 are burned and the device is thus "closed" to the outside world, in the sense that the memory 23 is no longer connected to or accessible via the data pins 10a and the other internal components are enclosed in the housing 2. After this operation, only the voltage supply lines 10b of the device are active for charging.

As another hardware security feature, the housing 2 is filled with pressurized air or other gas during production or gas is evacuated from the housing 2, and the housing 2 is sealed to make it gastight. If the housing is tampered with by an unauthorized user attempting to gain access to the components inside the housing 2, this will cause the housing 2 to no longer be gastight, which in turn causes gas to flow into/out of the housing (if pressurized initially). The anti-tampering sensor 26 can take the form of a pressure sensor, which can detect the resulting pressure change. Where air is evacuated from the housing during manufacture, to form a vacuum or near vacuum, the anti-tampering sensor 26 could also take the form of an oxygen (or other atmospheric gas) sensor, which detects the presence of oxygen (or another atmospheric gas) caused by the housing 2 no longer being gastight. The same effect could be achieved by filling the housing 2 with, say, carbon dioxide and using an oxygen sensor to detect the presence of oxygen, which indicate tampering in that context.

When the anti-tampering sensor 2 detects any interference to the password reminder device 1 (i.e. any tampering with the housing 2), any password data stored in the memory 23 is deleted (erased).

With these two security layers, it is impossible to reach the device by third parties or other devices: once the fuses 32 have been blown, the only way it might be possible to re-activate the internal circuitry is by opening up the housing 2 and somehow replacing or bypassing the fuses; however, this would trigger the anti-tampering sensor 26, causing the password data to be deleted.

Detecting tampering and erasing the data in response may require some power. However, the solar charger 8 keeps the battery charged when sufficient light is available. Because of the very low power consumption of the password reminder device 1, the battery 21 can remain charged for years without charging, which means even if an unauthorized user were to obstruct the solar panel 8 it would be years before the data could be accessed. For added security, the password data can be stored in volatile memory, which requires power from the battery 21 to retain the stored data. In that event, obstructing the solar panel 8 may eventually deplete the battery, but this will in turn cause the password data to be erased when the volatile memory is no longer powered. Alternatively, the password data could be actively erased if (say) the power level of the batter drops below a threshold, in which case the password data can be stored in volatile or non-volatile memory to achieve a similar effect.

The data can be erased in the sense that the bits are written over, e.g. with all 1s, all 0s, random bits etc. However, the term "erase" also covers cryptographic erasure, wherein the data is stored in an encrypted form and is erased by writing over or otherwise destroying an encryption key need to recover it. In this context, the encrypted bits may remain in the memory after the data has been erased, but are meaningless once the key has been destroyed.

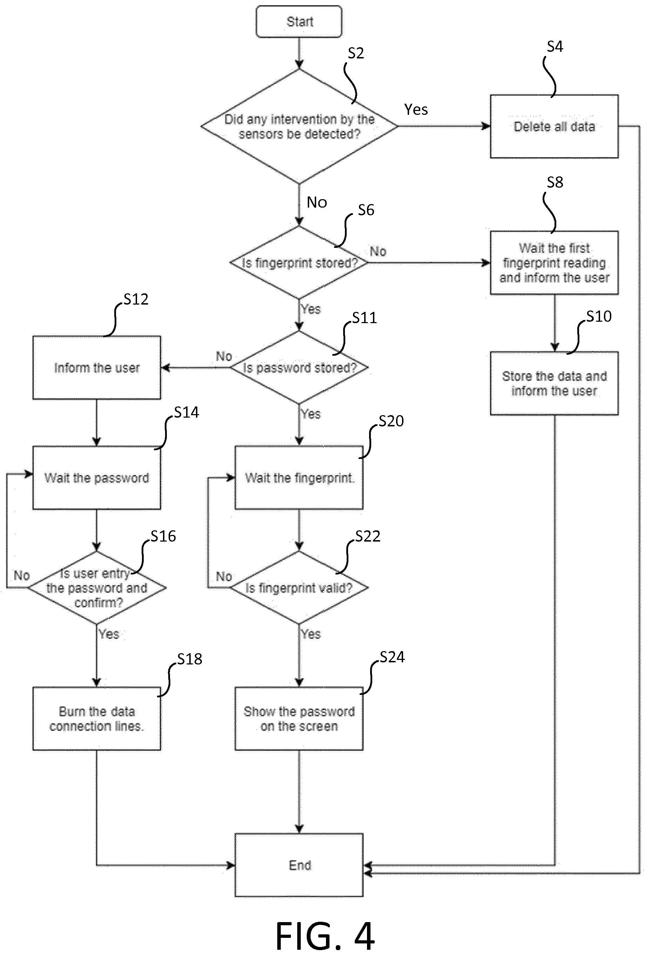

Figure 4 shows a flow chart for an example method of storing an accessing secret user-authentication data.

If at any time, the password reminder device 1 detects any tampering with the housing 2 (S2), then all password data stored in the memory 23 is erased (S4). The password reminder device 1 may be rendered permanently inoperable in that event.

In an initial configuration phase, if no fingerprint has been recorded (S6), the device waits (S8) for a first fingerprint to be registered. The user records his fingerprint by placing it on the fingerprint sensor 6, and in response the password reminder device 1 stores (S10) biometric data so that it can recognise the fingerprint in the future. In this manner, the user authorizes his fingerprint with the password reminder device 1. The password reminder device 1 informs the user that the fingerprint has been successfully registered, for example via a notification on the display 4.

Once the fingerprint has been registered but before any password has been stored (S11, "no" branch), the password reminder device 1 informs the user (S12) that no password has yet been stored, for example via a notification on the display 4. The password reminder device 1 waits for a password (S14) from an external computer connected to the password reminder device 1 via the data interface. Upon receiving a password via the data interface, the password reminder device 1 outputs (S16) the received password to the user, e.g. on the display 4 or via the external computer, and asks the user to confirm that the password is correct. In response, the user provides an input to either accept the password (if it is correct) or reject the password (if it is not). The user input can for example be instigated at the external computer and provided via the data interface, or the password reminder device 1 may comprise a user input device - such as a touch screen, button(s) etc. (not shown in the Figures) - via which the user input can be provided directly. If the user rejects the password, the method returns to step S 14 and the password reminder device 1 awaits a new password. If the user accepts the password, the method proceeds to step S18 at which the data lines 30a are burnt. The user input accepting the password thus acts as a disable instruction, in response to which the data interface is rendered inoperable; permanently inoperable in this example. The accepted password is stored in the memory 23, possibly in an encrypted form. Thereafter (S11, "yes" branch), the password reminder device 1 waits (S20) for an authorized fingerprint. When a fingerprint is detected at the fingerprint sensor 6, the password reminder device 1 determines (S22) whether it is authorized. If not, the method returns to step S20 and the password reminder device 1 continues to wait for an authorized fingerprint without allowing access to the stored password. If the detected fingerprint is authorized, the password reminder device 1 displays (S24) the stored password on the screen 4 in response for a limited time e.g. for a limited time interval or for as long as the authorized fingerprint remains detectable.

In the examples described above, the password reminder device is a portable, pocket-sized device, which an authorized user can use to access the stored password when needed. At least once the password data has been stored, the password reminder device 1 operates as a standalone device that selectively allows an authorized user access to the stored password. The password reminder device 1 described above is also a dedicated device for storing and accessing secret user-authentication data, however the password reminder device could alternatively be embodied in a (general purpose) mobile device having the described protection features. For example, the password reminder device can be embodied as a hardware module for incorporation in a mobile device (that is, as a modular component) with the described hardware security features. In these contexts, the password can be shown on the screen of the mobile device a small second screen can be added for the password. For a hardware module, a biometric sensor of the mobile device could be used to regulate access to the password data.

Whilst the above is described in the context of a fingerprint sensor, other types of biometric sensor can be used (such as a camera for facial recognition), and all description pertaining to fingerprints applies to other types of biometric identifier (such as faces).

Moreover, whilst in the above, a display 4 is provided to display the password, other types of output devices (such as a loudspeaker) can be used to output the password.

Moreover, whilst in the above the data interface of the password reminder device 1 is a wired interface, the data interface could also take the form of a wireless interface, passive or active, such as an NFC (near field communication) interface or other suitable wireless interface.

Moreover, whilst in the above, the data interface is rendered inoperable by disconnecting it from the power and data management system 22, it could be rendered inoperable in other ways. For example, in the above, the data interface is rendered permanently inoperable by blowing the fuses 32, and whilst this may be desirable in some contexts due to the high level of security, in other contexts it may be sufficient to disable the interface such that it can be re-enabled, but only by an authorized user. For example, it may be sufficient to disable the data interface such that an authorized fingerprint (or other biometric identifier) is required in order to re-enable it. What is material in this context is the fact that the internal circuitry that is disabled to render the data interface inoperable is enclosed within the housing, and thus cannot be accessed without tampering with the housing in a manner that is detectable to the anti-tampering sensor 26.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data, and in particular to a data storage system. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A device for storing and accessing secret user-authentication data, the device comprising:
a data storage system configured to store secret user-authentication data;
a control system configured to receive from a user a request to access the stored secret user-authentication data, determine if the user is authorized to access the secret user-authentication data, and output the secret user-authentication data to the user if so;
a data interface for input of secret user-authentication data; and
internal circuitry for enabling the secret user-authentication data to be supplied via the data interface to the data storage system for storage therein, wherein the control system is configured to disable the internal circuitry to render the data interface inoperable in response to a disable instruction, thereby preventing any unauthorized user from gaining access to the secret user-authentication data via the data interface.

2. The device of claim 1, comprising:
a housing; and
at least one anti-tampering sensor coupled to the control system for detecting when the housing has been tampered with, wherein the data storage system, the control system, the internal circuitry and the anti-tampering sensor are enclosed within the housing, such that the enclosed components cannot be accessed without tampering with the housing, wherein the control system is configured to erase the secret user-authentication data in response to detecting that the housing has been tampered with.

3. The device of claim 1 or 2, comprising at least one biometric sensor coupled to the control system, wherein the control system is configured to determine whether the user is authorized to access the secret user-authentication data based on a biometric identifier detected via the at least one biometric sensor.

4. The device of claim 3, wherein the at least one biometric sensor comprises a fingerprint sensor.

5. The device of claim 3 or claim 4, wherein the control system is configured to provide access to the secret user-authentication data for as long as an authorized biometric identifier remains detectable via the at least one biometric sensor.

6. The device of any of the preceding claims, wherein the control system is configured to disable the internal circuitry in response to the disable instruction by destroying at least part of the internal circuitry.

7. The device of claim 6, wherein the control system is configured to disable the internal circuitry by blowing at least one fuse of the internal circuitry.

8. The device of any of the preceding claims, wherein the data interface comprises at least one external connector.

9. The device of any of the preceding claims, wherein the internal circuitry comprises connecting circuitry arranged to connect the data interface to the data storage system, wherein the control system is configured to disable the connecting circuitry to disconnect the data interface from the data storage system in response to the disable instruction.

10. The device of claim 2 or any claim dependent thereon, comprising a battery for powering the device, which is enclosed within the housing, whereby the battery cannot be accessed without tampering with the housing.

11. The device of claim 2 or any claim dependent thereon, wherein the housing is gastight;
wherein the gastight housing contains pressurized gas, depressurized gas or a vacuum, and the at-least one anti-tampering sensor comprises a pressure sensor for detecting a pressure change caused by the housing no longer being gastight; or
wherein the gastight housing is devoid of at least one atmospheric gas, and the at least one anti-tampering sensor comprises a sensor for detecting the presence of said atmospheric gas caused by the housing no longer being gastight.

12. The device of any of the preceding claims, comprising at least one output device coupled to the control system, wherein the control system is configured to use the output device to output the secret user-authentication data to the user.

13. The device according to claim 12, wherein the at least one output device comprises a display.

14. The device of any of the preceding claims, embodied as:
a portable, pocket-sized device, or
a hardware module for incorporation in a mobile device.

15. A method of storing and accessing secret user-authentication data, the method comprising the following steps:
receiving secret user-authentication data at a data interface of a device;
supplying the secret user-authentication data to a data storage system of the device, the device having internal circuitry which enables the supplying step to be performed;
storing the secret user-authentication data in the data storage system;
disabling the internal circuitry to render the data interface inoperable in response to a disable instruction, thereby preventing any unauthorized user from gaining access to the secret user-authentication data via the data interface;
receiving from a user a request to access the stored secret user-authentication data; and
determining if the user is authorized to access the secret user-authentication data and outputting the secret user-authentication data to the user if so.
